# EUROPÄISCHE PATENTSCHRIFT

(11) **EP 2 163 447 B1**
(45) Veröffentlichungstag und Bekanntmachung des Hinweises auf die Patenterteilung: **09.11.2011**
(21) Anmeldenummer: 09011864.7
(22) Anmeldetag: 20.03.2008
(51) Int. Cl.: B60T 13/68, B60T 17/22, B60T 15/02, B60T 13/26

(54) **Druckmittelbetätigte Bremsanlage eines Fahrzeugs mit gegenläufige Drücke für Anhängerbremsen erzeugender Feststellbremseinrichtung**
Braking device for a vehicle activated by compressing a medium with handbrake device that produces opposing pressures for trailer brakes
Installation de frein actionnée par un moyen de pression d'un véhicule doté d'un dispositif de frein fixe produisant une pression contraire pour des freins de remorque

(30) Priorität: 23.03.2007 DE 102007014716
(43) Veröffentlichungstag der Anmeldung: 17.03.2010
(62) Teilanmeldung aus: 08734689.6
(73) Patentinhaber: KNORR-BREMSE Systeme für Nutzfahrzeuge GmbH, 80809 München (DE)
(72) Erfinder: Herges, Michael, 80965 München (DE)
(74) Vertreter: Schönmann, Kurt

(56) Entgegenhaltungen:
- EP-A- 1 504 975
- EP-A- 1 571 060

## Beschreibung

### Stand der Technik

Die vorliegende Erfindung betrifft eine druckmittelbetätigte Bremsanlage eines Fahrzeugs oder einer Zugfahrzeug-Anhängerkombination beinhaltend eine Feststellbremseinrichtung mit einem Feststellbremssignalgeber, welcher durch elektrische Signale eine elektronische Steuereinrichtung für eine elektro-pneumatische Ventileinrichtung steuert, die wenigstens einen Aktuator einer Radbremse mit Druckmittel beaufschlagt oder von Druckmittel entlastet, wobei abhängig von einer Betätigung des Feststellbremssignalgebers wenigstens zwei Betriebszustände der Bremsen des Fahrzeugs oder der Zugfahrzeug-Anhängerkombination hervorgerufen werden, wobei elektro-pneumatische Ventileinrichtung einerseits einen Anschluss für eine Anhängersteuerventileinrichtung und einen Anschluss für eine Feststellbremse des Zugfahrzeugs aufweist, gemäß dem Oberbegriff von Anspruch 1.

Üblicherweise werden bei Nutzfahrzeugen als Bremsaktuatoren sog. Kombibremszylinder verwendet, bei welchen an einen als aktive Betriebsbremse ausgestalteten Betriebsbremszylinder ein als passive Bremse ausgestalteter Federspeicherbremszylinder angekoppelt ist. In dem Betriebsbremszylinder ist ein durch ein Druckmittel betätigbarer Betriebsbremskolben längsverschieblich geführt, welcher eine Betriebsbremskammer begrenzt und mit einer auf Bremsbetätigungselemente einwirkenden Betriebsbrems-Kolbenstange verbunden ist. Demgegenüber ist in dem Federspeicherbremszylinder ein durch eine Speicherfeder betätigbarer Federspeicherbremskolben längsverschieblich geführt, welcher auf der einen Seite eine Federspeicherbremskammer und auf der entgegengesetzten Seite eine die Speicherfeder aufnehmende Federkammer begrenzt. Eine Druckbeaufschlagung der Betriebsbremskammer führt zu einem Zuspannen der Betriebsbremse; eine Druckbeaufschlagung der Federspeicherbremskammer dagegen zu einem Lösen der Federspeicherbremse. Umgekehrt führt eine Druckabsenkung in der Betriebsbremskammer zu einem Lösen der Betriebsbremse, eine Druckabsenkung in der Federspeicherbremskammer dagegen zu einem Zuspannen der Federspeicherbremse. Ein solcher Kombizylinder ist beispielsweise in der DE 29 23 359 C2 beschrieben.

Eine gattungsgemäße Bremsanlage ist beispielsweise aus der EP 1 783 019 A1 oder aus EP 1 504 975 A1 bekannt. Die jeweils in ein Feststellbremsmodul integrierte elektro-pneumatische Ventileinrichtung weist einen Anschluss für eine Anhängersteuerventileinrichtung und einen Anschluss für die Feststellbremse des Zugfahrzeugs auf.

Nach der geltenden Gesetzeslage kann bei geparkten oder abgestellten Zustand einer Zugfahrzeug-Anhängerkombination, d.h. bei zugespannter Feststellbremse des Zugfahrzeugs zusätzlich die Betriebsbremse des Anhängers zugespannt sein, erforderlich ist dies jedoch nicht. Folglich bleibt es dem Anwender überlassen, ob im geparkten oder abgestellten Zustand des an ein Zugfahrzeug angekuppelten Anhängers zusätzlich auch dessen Betriebsbremsen zugespannt werden oder ob diese gelöst bleiben. Um diesbezüglich unterschiedlichen Kundenwünschen Rechnung zu tragen, sollte der Zugfahrzeughersteller beide Funktionalitäten des Anhängers, d.h. Parken mit gelöster Betriebsbremse oder mit zugespannter Betriebsbremse mit einem möglichst geringen Aufwand realisieren können.

Es ist daher Aufgabe der vorliegenden Erfindung eine druckmittelbetätigte Bremsanlage eines Zugfahrzeug oder einer Zugfahrzeug-Anhängerkombination derart weiterzubilden, dass sie eine erweiterte Funktionalität aufweist.

Diese Aufgabe wird durch die Merkmale von Anspruch 1 gelöst.

### Offenbarung der Erfindung

Die Erfindung sieht vor, dass die elektro-pneumatische Ventileinrichtung wenigstens einen weiteren Anschluss für eine Anhängersteuerventileinrichtung aufweist und derart ausgebildet und von der elektronischen Steuereinrichtung derart ansteuerbar ist, dass auf ein einem geparkten oder abgestellten Zustand entsprechendes Signal des Feststellbremssignalgebers hin die Feststellbremse des Zugfahrzeugs zugespannt und der eine Anschluss für die Anhängersteuerventileinrichtung belüftet und der weitere Anschluss für die Anhängersteuerventileinrichtung entlüftet wird und dass auf wenigstens ein weiteres Signal des Feststellbremssignalgebers hin der eine Anschluss und der wenigstens eine weitere Anschluss gleichläufig be- oder entlüftet werden.

Durch die gegenläufigen Drucksignale an den Anschlüssen für die nachgeordnete Anhängersteuerventileinrichtung bei geparkter oder abgestellter Zugfahrzeug-Anhängerkombination kann dann durch ein- und dasselbe Feststellbremsmodul die jeweils gewünschte Funktionalität des Anhängers realisiert werden, also beispielsweise ein Zuspannen der Betriebsbremse des Anhängers, wenn dessen Anhängersteuerventileinrichtung an den einen Anschluss angeschlossen ist oder ein Lösen oder Gelösthalten der Betriebsbremse des Anhängers, wenn dessen Anhängersteuerventileinrichtung an den anderen Anschluss der Ventileinrichtung angeschlossen ist. Beide Arten von Funktionalitäten und damit unterschiedliche Kundenwünsche können folglich durch ein und dieselbe Ventileinrichtung erfüllt werden. Dies reduziert die Variantenvielfalt und damit die Herstellkosten der Ventileinrichtung.

Durch die in den Unteransprüchen aufgeführten Maßnahmen sind vorteilhafte Weiterbildungen und Verbesserungen der in den unabhängigen Ansprüchen angegebenen Erfindung möglich.

Das wenigstens eine weitere Signal des Feststellbremssignalgebers ist beispielsweise Signal, dem eine oder mehrere der folgenden Funktionen zugeordnet ist:
- Eine Testfunktion zum Testen, ob das Zugfahrzeug mit zugespannter Feststellbremse in der Lage ist, einen angekoppelten, aber ungebremsten Anhänger im Stillstand zu halten,
- eine Parkfunktion, bei welcher die Feststellbremse des Zugfahrzeugs zugespannt und die Betriebsbremse des Anhängers gelöst oder zugespannt ist,
- eine Fahrfunktion zum Fahren, bei welcher das Zugfahrzeug und der Anhänger ungebremst sind,
- eine Fahrfunktion zum Fahren mit Streckbremse, bei welcher das Zugfahrzeug ungebremst und der Anhänger zumindest kurzzeitig oder gestuft gebremst wird,
- eine Hilfsbremsfunktion zum Bremsen mit der Feststellbremse des Zugfahrzeugs und mit der Betriebsbremse des Anhängers bei einem Ausfall der Betriebsbremse des Zugfahrzeugs.

Zur Realisierung der oben beschriebenen Funktionalitäten beinhaltet die elektro-pneumatische Ventileinrichtung bevorzugt ein als 7/3-Wege-Ventil ausgebildetes Schieberventil.

Genaueres wird im Rahmen der folgenden Beschreibung eines Ausführungsbeispiels deutlich.

### Zeichnung

Ausführungsbeispiele der Erfindung sind in der Zeichnung dargestellt und in der nachfolgenden Beschreibung näher erläutert. In der Zeichnung zeigt
- Fig.1: einen schematischen Aufbauplan einer Feststellbremseinrich- tung einer Bremsanlage einer Zugfahrzeug-Anhänger- kombination;
- Fig.2: einen schematischen Aufbauplan einer Feststellbremseinrich- tung einer Bremsanlage einer Zugfahrzeug-Anhängerkombi- nation gemäß einer bevorzugten Ausführungsform der Erfin- dung;
- Fig.3a bis 3c: schematische Querschnittsdarstellungen eines tristabilen Schieberventils in drei unterschiedlichen Schieberstellungen, wie es in den Feststellbremseinrichtungen gemäß Fig.1 und Fig.2 verwendet wird;
- Fig.4: einen schematischen Aufbauplan einer bevorzugten Ausfüh- rungsform eines Drucksteuerteils einer Feststellbremseinrich- tung;
- Fig.5: einen schematischen Aufbauplan einer weiteren Ausführungs- form eines Drucksteuerteils einer Feststellbremseinrichtung;
- Fig.6: einen schematischen Aufbauplan einer weiteren Ausführungs- form eines Drucksteuerteils einer Feststellbremseinrichtung;
- Fig.7: einen schematischen Aufbauplan einer weiteren Ausführungs- form eines Drucksteuerteils einer Feststellbremseinrichtung.

### Beschreibung der Ausführungsbeispiele

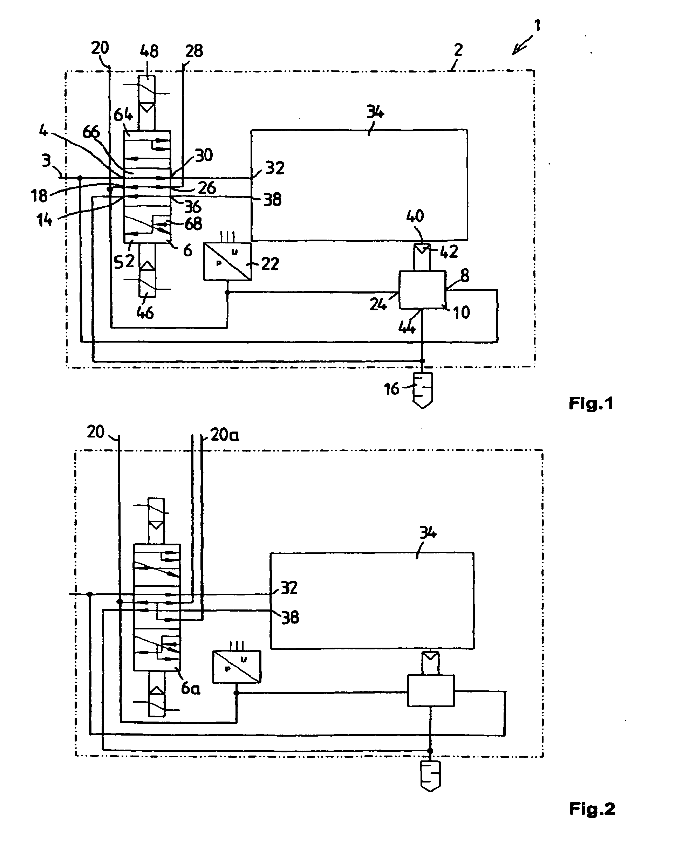

Die in Fig.1 gezeigte Feststellbremseinrichtung 1 als Bestandteil einer druckmittelbetätigten, beispielsweise elektro-pneumatisch betätigten Bremseinrichtung (EBS) einer Zugfahrzeug-Anhängerkombination ist im Zugfahrzeug angeordnet. Die Feststellbremseinrichtung hat einen beispielsweise manuell über einen Bedienhebel einstellbaren Feststellbremssignalgeber, welcher über eine elektrische Signalleitung durch elektrische Betätigungssignale eine elektronische Steuereinrichtung steuert. Der Bedienhebel, der Feststellbremssignalgeber, die Signalleitung sowie die elektronische Steuereinrichtung sind aus Maßstabsgründen hier nicht gezeigt, aber hinlänglich bekannt, beispielsweise aus der EP 1 783 019 A1. Die Feststellbremseinrichtung weist weiterhin eine von der Steuereinrichtung steuerbare elektro-pneumatische Ventileinrichtung 2 auf, welche über einen Vorratsanschluss 3 mit Druckluft aus einem hier nicht gezeigten Vorratsluftbehälter versorgt wird.

Der Vorratsanschluss 3 der Ventileinrichtung 2 ist mit einem Vorratsanschluss 4 eines tristabilen Schieberventils 6 verbunden. Der Vorratsanschluss 3 der Ventileinrichtung 2 steht weiterhin mit einem Vorratsanschluss 8 eines Relaisventils 10 der Ventileinrichtung 2 in Verbindung.

Das beispielsweise tristabile Schieberventil 6 wird direkt oder indirekt von der elektronischen Steuereinrichtung gesteuert und ist in Bezug auf hier vorzugsweise drei Stellungen eines Ventilschiebers 52 stabil. Mit Hilfe des Schieberventils 6 werden die Betriebszustände der Bremsen der Zugfahrzeug-Anhängerkombination abhängig von der Stellung des Ventilschiebers 52 eingestellt. Dabei ist das Schieberventil 6 so ausgeführt ist, dass der Ventilschieber 52 bei einer Störung in der elektronischen Steuerung seine zuletzt eingenommene Stellung stabil aufrecht erhält.

Über einen Entlüftungsanschluss 14 steht das tristabile Schieberventil 6 mit einer Entlüftung 16 der Ventileinrichtung 2 in Verbindung. Weiterhin ist ein Druckanschluss 18 vorhanden, welcher mit einem Anschluss 20 für eine Anhängersteuerventileinrichtung (Anhängersteuermodul oder Anhängersteuerventil), mit einem Drucksensor 22 sowie mit einem Druckausgang 24 des Relaisventils 10 der Ventileinrichtung 2 verbunden ist. Der Drucksensor 22 meldet den sensierten Druck am Druckausgang 24 des Relaisventils 10 als Druck-Istwert an die elektronische Steuereinrichtung zur Realisierung einer Druckregelung.

Andererseits steht das Schieberventil 6 über einen Federspeicheranschluss 26 mit einem Anschluss 28 für die Federspeicherbremsen des Zugfahrzeugs in Verbindung, d.h. mit Federspeicherbremszylindern, wie sie eingangs erläutert wurden und welche in belüftetem Zustand lösen und in entlüftetem Zustand zuspannen.

Weiterhin steht ein Drucksteueranschluss 30 des Schieberventils 6 mit einem Anschluss 32 eines Drucksteuerteils 34 in Verbindung. Nicht zuletzt ist ein weiterer Drucksteueranschluss 36 des Schieberventils 6 mit einem weiteren Anschluss 38 des Drucksteuerteils 34 verbunden. Ein Ausgang 40 des Drucksteuerteils 34 steht mit einem Steueranschluss 42 des Relaisventils 10 in Verbindung, welches ebenfalls einen Entlüftungsanschluss 44 aufweist, der mit der Entlüftung 16 der Ventileinrichtung 2 in Verbindung steht.

Das Relaisventil 10 moduliert in bekannter Weise abhängig von dem an seinem Steueranschluss 42 anstehenden Druck aus dem an seinem Vorratsanschluss 8 anstehenden Vorratsdruck des Vorratsdruckbehälters einen geregelten Druck an seinen Druckausgang 24.

Generell steuert eine Anhängersteuerventileinrichtung die Betriebsbremseinrichtung eines Anhängers an, welche eingangs beschriebene Betriebsbremszylinder umfasst, die in belüftetem Zustand zuspannen und in entlüftetem Zustand lösen. Weiterhin invertieren solche Anhängersteuerventileinrichtungen den in sie eingesteuerten Druck, d.h. sie invertieren einen einer Belüftung entsprechenden Druck in einen einer Entlüftung entsprechenden Druck und umgekehrt.

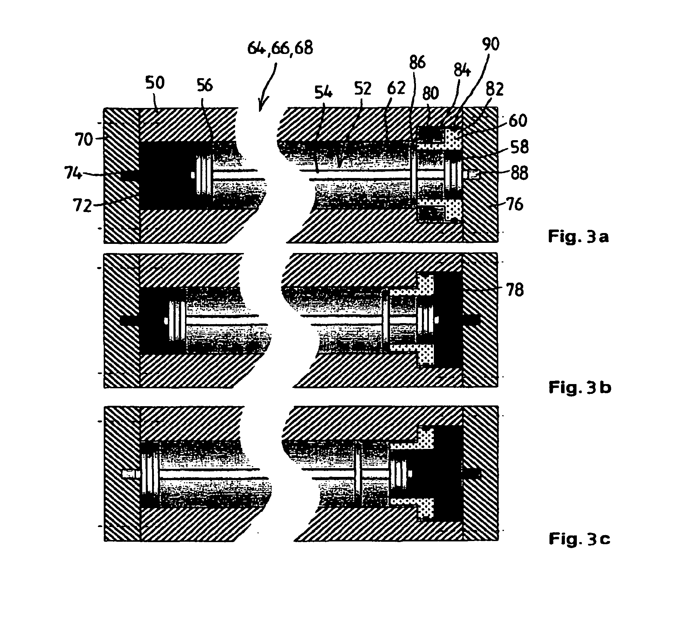

Das tristabile Schieberventil 6 wird durch vorzugsweise zwei, hier nicht explizit gezeigte 3/2-Wege-Magnetventile 46, 48 pneumatisch vorgesteuert und ist schematisch in Fig.3a bis Fig.3c dargestellt.

Wie aus Fig.3a hervorgeht, weist das Schieberventil 6 einen in einem Ventilschiebergehäuse 50 linear geführten Ventilschieber 52 auf, mit einer Kolbenstange 54, auf welche beispielsweise drei in einer gestuften Zylinderbohrung 62 des Ventilschiebergehäuses 50 dicht geführte Steuerkolben 56, 58, 60 wirken. Beispielsweise in einem Mittelteil weist der Ventilschieber 52 die in Fig.1 symbolisch, aber in Fig.3a nicht gezeigten drei Verknüpfungsteile 64, 66 und 68 auf, welche die insgesamt sechs Anschlüsse 4, 14, 18, 26, 30 und 36 des Schieberventils 6 in der symbolisch in Fig.1 gezeigten Weise und in drei Schalt- oder Schiebestellungen miteinander gezielt verbinden.

Dabei ist ein erster Steuerkolben 56 an dem in Fig.3a linksseitigen Ende der Kolbenstange 54 befestigt, wobei zwischen dem ersten Steuerkolben 56 und einem linksseitigen Boden 70 des Schieberventilgehäuses 50 eine erste Steuerkammer 72 ausgebildet ist, welche über einen ersten Steueranschluss 74 durch einen ersten Steuerdruck des einen 312-Wege-Vorsteuermagnetventils 46 belastbar ist.

Ebenso ist an dem in Fig.3a rechtsseitigen Ende der Kolbenstange 54 ein zweiter Steuerkolben 58 befestigt, wobei zwischen diesem und einem rechtsseitigen Boden 76 des Schieberventilgehäuses 50 eine zweite Steuerkammer 78 ausgebildet wird. Weiterhin ist ein dritter, als Ringkolben ausgeführter Steuerkolben 60 vorhanden, der radial außen in einem erweiterten Durchmesser 80 der Zylinderbohrung 62 des Ventilschiebergehäuses 50 ebenfalls linear geführt ist und in dessen zentraler Durchgangsbohrung der zweite Steuerkolben 58 linear geführt ist.

Mit einem Kolbenkragen 82 ist der dritte Steuerkolben 60 gegen eine Bohrungsstufe des erweiterten Durchmessers 80 der Zylinderbohrung 62 anschlagbar. Außerdem hat der dritte Steuerkolben 60 ein Kolbenhemd 84, das gegen einen mit der Kolbenstange 54 fest verbundenen Anschlag 86 anschlagbar ist. Eine Wirkfläche des dritten Steuerkolbens 60 begrenzt ebenfalls die zweite Steuerkammer 78, wobei die Summe der Wirkflächen des zweiten und dritten Steuerkolbens 58, 60 in Bezug auf die zweite Steuerkammer 78 größer ist als die Wirkfläche des ersten Steuerkolbens 56 in Bezug auf die erste Steuerkammer 72. Die zweite Steuerkammer 78 wird durch einen zweiten Steueranschluss 88 mit einem zweiten Steuerdruck des anderen 3/2-Wege-Vorsteuermagnetventils 48 belastet.

Auf den Ventilschieber 52 können daher der von dem einen 3/2-Wege-Vorsteuermagnetventil 46 erzeugte erste Steuerdruck in eine erste Stellrichtung, in Fig.3a nach rechts, und der von dem anderen 3/2-Wege-Vorsteuermagnetventil 48 erzeugte zweite Steuerdruck in eine gegenüber der ersten Stellrichtung entgegensetzte zweite Stellrichtung, in Fig.3a nach links, wirken.

In der Situation von Fig.3a ist die erste Steuerkammer 72 durch den ersten Steuerdruck belastet, während die zweite Steuerkammer 78 entlüftet ist, wodurch die Kolbenstange 54 nach rechts verschoben wird, bis der zweite Steuerkolben 58 und der dritte Steuerkolben 60 den linken Boden 70 des Ventilschiebergehäuses 50 kontaktieren. Diese durch den Anschlag am Boden 70 definierte Stellung des Ventilschiebers 52 bewirkt, dass ein bestimmtes Verknüpfungsteil der drei mit der Kolbenstangen verbundenen Verknüpfungsteile 64, 66, 68 von Fig.1 mit den Anschlüssen 4, 14, 18, 26, 30 und 36 des Schieberventils 6 in Überdeckung gebracht wird, um die in Fig.1 symbolisch dargestellten Verbindungen zwischen diesen Anschlüssen hervorzurufen.

Wird gemäß Fig.3b nun die zweite Steuerkammer 78 unter den zweiten Steuerdruck gesetzt, der beispielsweise genauso groß wie der erste Steuerdruck ist, so bewirkt dies, dass der zweite Steuerkolben 58 und der dritte Steuerkolben 60 nach links verschoben werden, wobei der zweite Steuerkolben 58 die Kolbenstange 54 direkt und der dritte Steuerkolben 60 die Kolbenstange 54 über den Anschlag 86 mitnimmt. Durch die Verschiebung der Kolbenstange wird nun ein anderes Verknüpfungsteil der drei Verknüpfungsteile 64, 66, 68 von Fig.1 mit den Anschlüssen 4, 14, 18, 26, 30 und 36 des Schieberventils 6 in Überdeckung gebracht, um wiederum bestimmte, in Fig.1 symbolisch gezeigte Verbindungen zwischen den Anschlüssen 4, 14, 18, 26, 30 und 36 hervorzurufen. Die Bewegung nach links kommt trotz gleich großer Steuerdrücke in der ersten Steuerkammer 72 und in der zweiten Steuerkammer 78 zustande, weil die Summe der Wirkungsflächen des zweiten Steuerkolbens 58 und des dritten Steuerkolbens 60 größer ist als die Wirkungsfläche des ersten Steuerkolbens 56. Definiert wird die Stellung des Ventilschiebers 52 gemäß Fig.3b auch durch den Anschlag des dritten Steuerkolbens 60 an der Bohrungsstufe des erweiterten Durchmessers 80 der Zylinderbohrung 62 des Ventilschiebergehäuses 50.

Wenn nun ausgehend von dem Zustand in Fig.3b die erste Steuerkammer 72 gemäß Fig.3c entlüftet, der zweite Steuerdruck in der zweiten Steuerkammer 78 aber aufrecht erhalten wird, so befindet sich der dritte Steuerkolben 60 zwar bereits im Anschlag gegen die Bohrungsstufe des erweiterten Durchmessers 80, jedoch kann sich der im dritten Steuerkolben 60 geführte zweite Steuerkolben 58 noch weiter nach links bewegen, bis der erste Steuerkolben 56 am linken Boden 70 des Ventilschiebergehäuses 50 anschlägt, wodurch sich ebenfalls eine definierte Stellung des Ventilschiebers 52 bzw. der Kolbenstange 54 ergibt, in welcher nun wiederum ein anderes Verknüpfungsteil der drei Verknüpfungsteile 64, 66, 68 von Fig.1 mit den Anschlüssen 4, 14, 18, 26, 30 und 36 des Schieberventils 6 in Überdeckung gebracht wird.

Die drei Steuerkolben 56, 58, 60 dichten gegen die radial innere Fläche der Zylinderbohrung 62 des Ventilschiebergehäuses 50 bevorzugt durch radial äußere Gleitdichtungen 90 ab. Diese Gleitdichtungen 90 bewirken bei ruhendem Ventilschieber 52 insbesondere einen Reibschluss in Form von Haftreibung zwischen den Steuerkolben 56, 58 und 60 und dem Ventilschiebergehäuse 50. Aufgrund dieses Reibschlusses und des in jeder der drei Stellungen gemäß Fig.3a bis Fig.3c vorliegenden Formschlusses durch die oben beschriebenen Anschläge der Steuerkolben 56, 58, 60 in einer Verstellrichtung des Ventilschiebers 52 sind diese Stellungen stets stabil, auch wenn der erste Streuerdruck oder der zweite Steuerdruck aufgrund einer Störung in der elektrischen Steuerung der 3/2-Wege-Vorsteuermagnetventile 46, 48 ausfällt. Da das Schieberventil 6 daher in allen drei Stellungen gemäß Fig.3a bis Fig.3c stabil bleibt, auch wenn die Steuerdrücke ausfallen, ist es tristabil.

Bevorzugt sind die beiden 3/2-Wege-Vorsteuermagnetventile ausgebildet, dass sie auf ein elektrisches Signal der elektronischen Steuereinrichtung hin lediglich einen kurzen Druckpuls in den Steuerkammern 72 und 78 erzeugen.

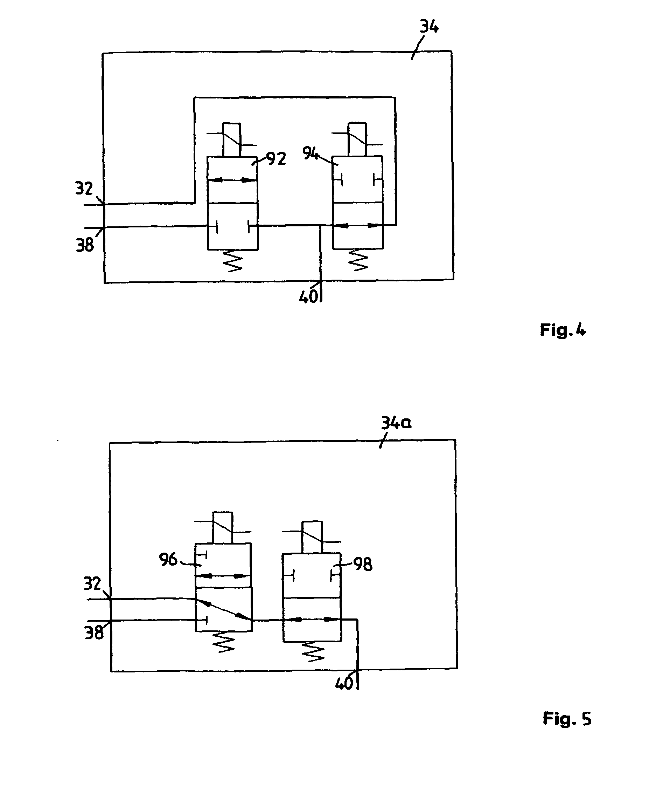

In Fig.4 ist ein bevorzugtes Ausführungsbeispiel eines Drucksteuerteils 34 gezeigt, wie es beispielsweise in einer Ventileinrichtung 2 gemäß Fig.1 eingesetzt wird. Demnach beinhaltet das Drucksteuerteil 34 der Ventileinrichtung zwei federbelastete 2/2-Wegemagnetventile 92, 94, wovon ein 2/2-Wegemagnetventil 92 stromlos durchschaltet und das andere 2/2-Wegemagnetventil 94 stromlos sperrt. Beide 2/2-Wegemagnetventile 92, 94 können getaktet zwischen ihren beiden Schaltstellungen hin- und hergeschaltet werden. Das Drucksteuerteil 34 ist über seine beiden Anschlüsse 32, 38 mit dem Schieberventil 6 verbunden, wobei der eine Anschluss 32 den an ihm anstehenden Druck an den Ausgang 40 und damit bis zum Steueranschluss 42 des Relaisventils 10 durchsteuert, wenn das 2/2-Wegemagnetventile 94 stromlos gesetzt ist. Der andere Anschluss 38 des Drucksteuerteils 34 sperrt demgegenüber den an ihm anstehenden Druck, wenn es stromlos gesetzt sind. Im bestromten Zustand kehren sich diese Verhältnisse um, wie anhand von Fig.4 leicht vorstellbar ist.

Gemäß Fig.5 beinhaltet das Drucksteuerteil 34a der Ventileinrichtung 2 gemäß einer weiteren Ausführungsform ein 312-Wegemagnetventil 96 und ein 2/2-Wegemagentventil 98, das getaktet geschaltet werden kann.

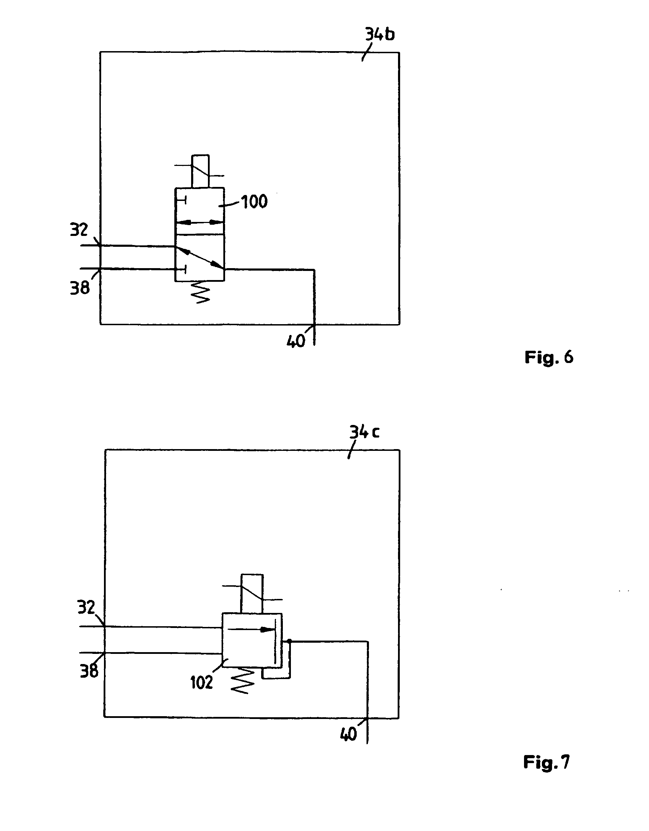

Die Ausführungsform von Fig.6 zeigt ein Drucksteuerteil 34b mit einem einzigen 3/2-Wege-Magnetventil 100 als Regelventil, welches laufend zwischen einer Be- und einer Entlüftungsstellung hin- und hergeschaltet wird, wobei das Verhältnis der Dauer der Be- und Entlüftungszyklen den einzustellenden Druck bestimmt. Eine solche Druckregelung kommt ohne Drucksensor aus.

Schließlich kann das Drucksteuerteil 34c auch ein Proportionalventil 102 gemäß Fig.7 beinhalten.

Allen den Ausführungsformen des Drucksteuerteils 34, 34a, 34b und 34c gemäß Fig.4 bis Fig.7 ist gemeinsam, dass sie zwei Anschlüsse 32, 38 aufweisen, von welcher ein Anschluss 32 ein NO-port ist (normally open), weil der an ihm anstehende Druck bei stromlos gesetzten Ventilen (z.B. 92, 94 in Fig.4) im Drucksteuerteil 34 an den Ausgang 40 durchgesteuert wird, und der andere Anschluss 38 ein NC-port (normally closed) ist, weil der an ihm anstehende Druck bei stromlos gesetzten Ventilen (z.B. 92, 94 in Fig.4) im Drucksteuerteil 34 gesperrt und nicht bis an den Ausgang 40 weiter gesteuert wird.

Vor diesem Hintergrund wird im folgenden die Funktionsweise der Feststellbremseinrichtung 1 anhand von Fig.1 für das Schieberventil 6 und anhand der Ausführungsform von Fig.5 für das Drucksteuerteil 34a beschrieben :

Zum Einstellen des Betriebsmodus "Fahren" gezeigt stellt der Fahrer an dem Bedienhebel des Feststellbremssignalgebers eine entsprechende Stellung ein. Die pneumatische Vorsteuerung durch beiden 3/2-Wegevorsteuer-Magnetventile 46, 48 des tristabilen Schieberventils 6 gemäß Fig.1 stellen dessen Ventilschieber 52 bedingt durch eine entsprechende Ansteuerung durch die elektronische Steuereinrichtung dann derart ein, dass das in Fig.1 obere Verknüpfungsteil 64 mit sich mit den Anschlüssen 4, 14, 18, 26, 30, 36 des Schieberventils 6 überdeckt.

Dann wird zum einen der Vorratsanschluss 4 mit dem Anschluss 28 für die Federspeicherbremse und mit dem einen Anschluss 32 (stromlos durchschaltend oder "normally open") des Drucksteuerteils 34 verbunden. Dies bewirkt, dass die Federspeicherbremszylinder des Zugfahrzeugs belüftet werden und somit dessen Federspeicherbremse gelöst wird. Weiterhin wird Vorratsdruck durch das stromlos gesetzte Drucksteuerteil 34a gemäß Fig.5 hindurch bis zum Steueranschluss 42 des Relaisventils 10 durchgesteuert, welches daraufhin den Anschluss 20 für die Anhängersteuerventileinrichtung belüftet, welche diese Belüftung in eine Entlüftung invertiert, wodurch der Druck in den aktiven Betriebsbremsen des Anhängers sinkt und diese dadurch gelöst werden. Zum andern wird dann der andere Anschluss 38 (stromlos gesperrt oder "normally closed") des Drucksteuerteils 34a mit der Entlüftung 16 verbunden.

Durch Bestromen des 3/2-Wegemagnetventils 96 des Drucksteuerteils 34a und durch getaktete Ansteuerung des 2/2-Wegemagnetventils 98 des Drucksteuerteils 34a kann dann der Anschluss 20 für die Anhängersteuerventileinrichtung zeitlich gestuft entlüftet werden. Diese zeitlich gestufte Entlüftung invertiert die Anhängersteuerventileinrichtung in eine zeitlich gestufte Belüftung der aktiven Betriebsbremsen des Anhängers vorzugsweise zum Streckbremsen der Zugfahrzeug-Anhänger-Kombination. Denn wenn im Betriebsmodus "Fahren" die Zugfahrzeug-Anhängerkombination einknickt, kann sie der Fahrer durch eine manuelle Betätigung des Bedienhebels in die Stellung "Streckbremse" wieder gerade stellen, in welcher das 312-Wegemagnetventil 96 des Drucksteuerteils 34 bestromt und das 2/2-Wegemagnetventil 98 getaktet angesteuert wird.

Erforderlichenfalls muss der Fahrer zwischen der Stellung "Fahren" und "Streckbremsen" hin und her schalten, bis die Geradestellung erfolgt ist. Denn zum Streckbremsen werden nur die Betriebsbremsen des Anhängers betätigt, die Bremsen des Zugfahrzeugs jedoch nicht. Dabei werden die Betriebsbremsen des Anhängers wechselweise solange zugespannt und wieder gelöst, bis die Zugfahrzeug-Anhängerkombination wieder geradegestellt ist. Über den Drucksensor 22 und die elektronische Steuereinrichtung ist dabei eine Druckregelung am Anschluss 20 für die Anhängersteuerventileinrichtung möglich.

Falls die Betriebsbremsen des Zugfahrzeugs ausfallen, hat der Fahrer die Möglichkeit, die Zugfahrzeug-Anhängerkombination einzubremsen, indem er durch eine entsprechende Betätigung des Bedienhebels des Feststellbremssignalgebers ein gestuftes Bremsen mit der Federspeicherbremse des Zugfahrzeugs und mit der Betriebsbremse des Anhängers hervorruft ("Hilfsbremsen"). Dann wird das mittlere Verknüpfungsteil 66 des Schieberventils 6 mit dessen Anschlüssen 4, 14, 18, 26, 30, 36 in Überdeckung gebracht. Diese Schalt- oder Schiebestellung des Schieberventils 6 ist in Fig.1 gezeigt.

Dann sind der Anschluss 20 für die Anhängersteuerventileinrichtung und der Anschluss 28 für die Federspeicherbremse des Zugfahrzeugs mit dem Druckausgang 24 des Relaisventils 10 verbunden. In der Federspeicherbremse des Zugfahrzeugs herrscht daher der gleiche Druck wie am Anschluss 20 für die Anhängersteuerventileinrichtung. Dieser Druck wird vom Druckausgang 24 des Relaisventils 10 herangeführt und vom Drucksensor 22 gemessen.

Andererseits steht dann der eine Anschluss 32 (stromlos durchschaltend oder "normally open") des Drucksteuerteils 34a mit dem Vorratsanschluss 3 in Verbindung, so dass Vorratsdruck zum Steueranschluss 42 des Relaisventils 10 durchgesteuert wird, welches daraufhin seinen Druckausgang 24 belüftet. Ein belüfteter Anschluss 20 für die Anhängersteuerventileinrichtung bedeutet durch die Invertierung eine Entlüftung der Betriebsbremsen des Anhängers, wodurch diese gelöst sind. Weiterhin resultiert die Belüftung des Anschlusses 28 für die Federspeicherbremse des Zugfahrzeugs in einem Lösen der Federspeicherbremse, so dass die Zugfahrzeug-Anhänger-Kombination zunächst ungebremst ist. Der andere Anschluss 38 (stromlos sperrend oder "normally closed") des Drucksteuerteils 34a ist zunächst mit der Entlüftung 16 verbunden, weil das 312-Wege-Magnetventil 96 des Drucksteuerteils 34a diesen Anschluss 38 stromlos auf die Entlüftung 16 schaltet.

Wenn nun der Bedienhebel des Feststellbremssignalgebers in die Stellung "Hilfsbremse" eingestellt wird, steht jedoch nicht nur der mittlere Verknüpfungsteil 66 des Schieberventils 6 mit seinen Anschlüssen 4, 14, 18, 26 und 30 in Überdeckung, sondern gleichzeitig wird das 3/2-Wegemagnetventil 96 im Drucksteuerteil 34a bestromt und das 2/2-Wege-Magnetventil 98 gepulst oder getaktet angesteuert, wodurch am Steueranschluss 42 des Relaisventils 10 eine zeitlich gestufte Entlüftung stattfindet, welche dann sowohl in den Anschluss 20 für die Anhängersteuerventileinrichtung als auch in den Anschluss 28 für die Federspeicherbremse des Zugfahrzeugs eingesteuert wird. Durch die Invertierung in der Anhängersteuerventileinrichtung ergibt sich daraus ein gestuftes Zuspannen der Betriebsbremsen des Anhängers, und in der Federspeicherbremse des Zugfahrzeugs führt die gestufte Entlüftung ebenfalls zu einem gestuften Zuspannen dieser Bremse. Das dadurch hervorgerufene zyklische Zuspannen und Lösen der Betriebsbremsen des Anhängers bzw. der Federspeicherbremsen des Zugfahrzeugs kommt einer Komfortbremsung mit einer gewissen Antiblockierfunktion gleich.

Für den Fall, dass die Zugfahrzeug-Anhängerkombination abgestellt oder geparkt werden soll, wird der Bedienhebel des Feststellbremssignalgebers in die Position "Parken" gebracht, was dazu führt, dass das in Fig.1 untere Verknüpfungsteil 68 sich mit den Anschlüssen 4, 14, 18, 26 und 30 des Schieberventils 6 überdeckt. Dann ist der Anschluss 28 für die Federspeicherbremse des Zugfahrzeugs mit der Entlüftung 16 verbunden, wodurch die Federspeicherbremsen des Zugfahrzeugs zuspannen. Weiterhin ist der eine Anschluss 32 ("normally open" oder stromlos durchsteuernd) des Drucksteuerteils 34a mit der Entlüftung 16 verbunden, wodurch ebenfalls der Anschluss 20 für die Anhängersteuerventileinrichtung über das Relaisventil 10 entlüftet wird, was durch die dort statt findende Invertierung in einer Belüftung der Betriebsbremse des Anhängers und damit in einem Zuspannen der aktiven Betriebsbremsen des Anhängers resultiert. Weiterhin steht der Vorratsanschluss 3 oder 4 mit dem weiteren Anschluss 38 ("normaly closed" oder stromlos gesperrt) des Drucksteuerteils 34 in Verbindung.

Falls nun das 3/2-Wege-Magnetventil 96 des Drucksteuerteils 34a bestromt wird, was beispielsweise durch Einstellen des Bedienhebels des Feststellbremssignalgebers in die Stellung "Testfunktion" bewerkstelligt wird, so wird Vorratsdruck über den Anschluss 38 und das stromlos durchgeschaltete 2/2-Wege-Magnetventil 98 zum Steueranschluss 42 des Relaisventils 10 durchgesteuert, wodurch dieses den Anschluss 20 für die Anhängersteuerventileinrichtung belüftet. Die Anhängersteuerventileinrichtung entlüftet dann durch Invertierung die Betriebsbremsen des Anhängers und löst sie damit. Mit der Testfunktion wird daher geprüft, ob das mit der Feststellbremse eingebremste Zugfahrzeug den ungebremsten Anhänger im Stand halten kann.

Bei der in Fig.2 gezeigten Ausführungsform der Ventileinrichtung 2 sind die gegenüber dem vorhergehenden Ausführungsbeispiel von Fig.1 gleich bleibenden und gleich wirkenden Teile durch die gleichen Bezugszeichen gekennzeichnet.

Die Ausführungsform von Fig.2 weist neben dem einen Anschluss 20 für die Anhängersteuerventileinrichtung einen weiteren Anschluss 20a für die Anhängersteuerventileinrichtung auf. Der Hintergrund für den weiteren Anschluss 20a für die Anhängersteuerventileinrichtung besteht darin, dass nach der geltenden Gesetzeslage bei geparkten oder abgestellten Zustand einer Zugfahrzeug-Anhängerkombination, d.h. bei zugespannter Feststellbremse des Zugfahrzeugs zusätzlich die Betriebsbremse des Anhängers zugespannt sein kann, erforderlich ist dies jedoch nicht. Folglich bleibt es dem Anwender überlassen, ob im geparkten oder abgestellten Zustand des an ein Zugfahrzeug angekuppelten Anhängers zusätzlich auch dessen Betriebsbremsen zugespannt werden oder ob diese gelöst bleiben.

Gemäß der Ausführungsform von Fig.2 verfügt die elektro-pneumatische Ventileinrichtung 2 daher über einen weiteren Anschluss 20a für die Anhängersteuerventileinrichtung ist und derart ausgebildet und von der elektronischen Steuereinrichtung derart ansteuerbar sein, dass auf ein einem geparkten oder abgestellten Zustand entsprechendes Signal des Feststellbremssignalgebers hin die Feststellbremse des Zugfahrzeugs zugespannt und der eine Anschluss 20 für die Anhängersteuerventileinrichtung belüftet und der weitere Anschluss 20a für die Anhängersteuerventileinrichtung entlüftet wird oder umgekehrt. Hierzu ist das Schieberventil 6a als 7/3-Wege-Ventil ausgebildet.

Durch die gegenläufigen Drucksignale an den beiden Anschlüssen 20 und 20a für die nachgeordnete Anhängersteuerventileinrichtung kann dann bei geparkter oder abgestellter Zugfahrzeug-Anhängerkombination durch ein- und dieselbe Ventileinrichtung die jeweils gewünschte Funktionalität des Anhängers realisiert werden, also beispielsweise ein Zuspannen der Betriebsbremse des Anhängers, wenn dessen Anhängersteuerventileinrichtung an den einen Anschluss 20 angeschlossen ist oder ein Lösen oder Gelösthalten der Betriebsbremse des Anhängers, wenn dessen Anhängersteuerventileinrichtung an den anderen Anschluss 20a angeschlossen ist. Es versteht sich weiterhin, dass wenn an den einen Anschluss 20 oder an den anderen Anschluss 20a eine Anhängersteuerventileinrichtung eines Anhängers angeschlossen wird, der jeweils andere Anschluss 20a bzw. 20 druckdicht verschlossen wird.

Je nach Ausbaustufe hinsichtlich der gewünschten Betriebsmodi kann jede der Ausführungsformen von Schieberventilen 6, 6a gemäß Fig.1 und Fig.2 mit Drucksteuerteilen 34, 34a, 34b und 34c gemäß Fig.4 bis Fig.7 kombiniert werden.

Bei dem bevorzugten Ausführungsbeispiel ist der Feststellbremssignalgeber 4 ein manuell einstellbares Bedienteil. Alternativ oder zusätzlich können die Signale für die Steuereinrichtung 8 der Feststellbremseinrichtung 1 jedoch auch automatisch erzeugt werden, beispielsweise in Abhängigkeit von den Betriebszuständen des Fahrzeugs, insbesondere von einer externen Einheit wie einem weiteren Steuergerät, das mit der Steuereinrichtung kommuniziert, beispielsweise von einem Hillholder. Dies gilt für sämtliche Betriebsmodi der Feststellbremseinrichtung 1 wie "Fahren", "Parken", "Hilfsbremse" und "Testfunktion".

**Bezugszahlenliste**
- 1: Feststellbremseinrichtung
- 2: Ventileinrichtung
- 3: Vorratsanschluss
- 4: Vorratsanschluss
- 6: Schieberventil
- 6a: Schieberventil
- 8: Vorratsanschluss / Relaisventil
- 10: Relaisventil
- 14: Entlüftungsanschluss
- 16: Entlüftung
- 18: Druckanschluss
- 20/20a: Anschluss Anhängersteuerventileinrichtung
- 22: Drucksensor
- 24: Druckausgang
- 26: Federspeicheranschluss
- 28: Anschluss für Federspeicherbremsen
- 30: Drucksteueranschluss
- 32: Anschluss
- 34: Drucksteuerteil
- 34a/34b/34c: Drucksteuerteil
- 36: Drucksteueranschluss
- 38: Anschluss NC
- 40: Ausgang
- 42: Steueranschluss
- 44: Entlüftungsanschluss
- 46: Vorsteuerventil
- 48: Vorsteuerventil
- 50: Ventilschiebergehäuse
- 52: Ventilschieber
- 54: Kolbenstange
- 56: 1. Steuerkolben
- 58: 2. Steuerkolben
- 60: 3. Steuerkolben
- 62: Zylinderbohrung
- 64: Verknüpfungsteil
- 66: Verknüpfungsteil
- 68: Verknüpfungsteil
- 70: Boden
- 72: 1. Steuerkammer
- 74: 1. Steueranschluss
- 76: Boden
- 78: 2. Steuerkammer
- 80: erweiterter Durchmesser
- 82: Kolbenkragen
- 84: Kolbenhemd
- 86: Anschlag
- 88: 2. Steueranschluss
- 90: Gleitdichtungen
- 92: 2/2-Wege-Magnetventil
- 94: 2/2-Wege-Magnetventil
- 96: 3/2-Wege-Magnetventil
- 98: 2/2-Wege-Magnetventil
- 100: 3/2-Wege-Magnetventil
- 102: Proportionalventil

## Patentansprüche

1. Druckmittelbetätigte Bremsanlage eines Fahrzeugs oder einer Zugfahrzeug-Anhängerkombination beinhaltend eine Feststellbremseinrichtung (1) mit einem Feststellbremssignalgeber, welcher durch elektrische Signale eine elektronische Steuereinrichtung für eine elektro-pneumatische Ventileinrichtung (2) steuert, die wenigstens einen Aktuator einer Radbremse mit Druckmittel beaufschlagt oder von Druckmittel entlastet, wobei abhängig von einer Betätigung des Feststellbremssignalgebers wenigstens zwei Betriebszustände der Bremsen des Fahrzeugs oder der Zugfahrzeug-Anhängerkombination hervorgerufen werden, wobei die elektro-pneumatische Ventileinrichtung (2) einerseits einen Anschluss (20) für eine Anhängersteuerventileinrichtung und einen Anschluss (28) für eine Feststellbremse des Zugfahrzeugs aufweist, **dadurch gekennzeichnet, dass** die elektro-pneumatische Ventileinrichtung (2) wenigstens einen weiteren Anschluss (20a) für eine Anhängersteuerventileinrichtung aufweist und derart ausgebildet und von der elektronischen Steuereinrichtung derart ansteuerbar ist, dass auf ein einem geparkten oder abgestellten Zustand entsprechendes Signal des Feststellbremssignalgebers hin die Feststellbremse des Zugfahrzeugs zugespannt und der eine Anschluss (20) für die Anhängersteuerventileinrichtung belüftet und der weitere Anschluss (20a) für die Anhängersteuerventileinrichtung entlüftet wird und dass auf wenigstens ein weiteres Signal des Feststellbremssignalgebers hin der eine Anschluss (20) und der wenigstens eine weitere Anschluss (20a) gleichläufig be- oder entlüftet werden.

2. Bremsanlage nach Anspruch 1, **dadurch gekennzeichnet, dass** das wenigstens eine weitere Signal des Feststellbremssignalgebers ein Signal ist, dem eine oder mehrere der folgenden Funktionen zugeordnet ist:
- Eine Testfunktion zum Testen, ob das Zugfahrzeug mit zugespannter Feststellbremse in der Lage ist, einen angekoppelten, aber ungebremsten Anhänger im Stillstand zu halten,
- eine Fahrfunktion zum Fahren, bei welcher das Zugfahrzeug und der Anhänger ungebremst sind,
- eine Fahrfunktion zum Fahren mit Streckbremse, bei welcher das Zugfahrzeug ungebremst und der Anhänger gebremst wird,
- eine Hilfsbremsfunktion zum Bremsen mit der Feststellbremse des Zugfahrzeugs und mit der Betriebsbremse des Anhängers bei einem Ausfall der Betriebsbremse des Zugfahrzeugs.

3. Bremsanlage nach einem der vorhergehenden Ansprüche, **dadurch gekennzeichnet, dass** die elektro-pneumatische Ventileinrichtung (2) wenigstens ein direkt oder indirekt von der elektronischen Steuereinrichtung gesteuertes, in Bezug auf wenigstens zwei Stellungen eines Ventilschiebers (52) stabiles Schieberventil (6a) beinhaltet, wobei die Betriebszustände der Bremsen abhängig von der Stellung des Ventilschiebers (52) einstellbar sind und das Schieberventil (6a) so ausgeführt ist, dass der Ventilschieber (52) bei einer Störung in der elektronischen Steuerung seine zuletzt eingenommene Stellung stabil aufrecht erhält.

4. Bremsanlage nach Anspruch 3, **dadurch gekennzeichnet, dass** der Ventilschieber (52) des Schieberventils (6a) durch wenigstens ein von der elektronischen Steuereinrichtung elektrisch gesteuertes Vorsteuermagnetventil (46, 48) druckmittelbetätigt ausgeführt ist.

5. Bremsanlage nach Anspruch 4, **dadurch gekennzeichnet, dass** der Ventilschieber (52) mehrere, von Steuerdrücken der Vorsteuermagnetventile (46, 48) beaufschlagte Steuerkolben (56, 58, 60) aufweist.

6. Bremsanlage einer Zugfahrzeug-Anhängerkombination nach einem der Ansprüche 3 bis 5, **dadurch gekennzeichnet, dass** das Schieberventil (6a) in Bezug auf drei Stellungen des Ventilschiebers (52) tristabil ausgeführt ist, wobei eine erste stabile Stellung des Ventilschiebers (52) einem geparkten Zustand der Zugfahrzeug-Anhängerkombination zugeordnet ist, in welchem eine Feststellbremse des Zugfahrzeugs zugespannt und eine Betriebsbremse des Anhängers zugespannt oder gelöst ist, eine zweite stabile Stellung des Ventilschiebers einem Fahrzustand der Zugfahrzeug-Anhängerkombination zugeordnet ist, in welchem die Bremsen des Zugfahrzeugs und des Anhängers gelöst sind und eine dritte stabile Stellung des Ventilschiebers (52) einem Hilfsbremszustand der Zugfahrzeug-Anhängerkombination zugeordnet ist, in welchem bei einem Ausfall der Betriebsbremse des Zugfahrzeugs die Feststellbremse des Zugfahrzeugs und die Betriebsbremse des Anhängers zugespannt sind.

7. Bremsanlage nach Anspruch 6, **dadurch gekennzeichnet, dass** das Schieberventil (6a) als 7/3-Wege-Ventil ausgebildet ist.

8. Bremsanlage nach Anspruch 6 oder 7, **dadurch gekennzeichnet, dass** auf den Ventilschieber (52) ein von einem ersten Vorsteuermagnetventil (46) erzeugten ersten Steuerdruck in eine erste Stellrichtung steuerbarer erster Steuerkolben (56), ein von einem zweiten Vorsteuermagnetventil (48) erzeugten zweiten Steuerdruck in eine gegenüber der ersten Stellrichtung entgegen gesetzten zweiten Stellrichtung steuerbarer zweiter Steuerkolben (58) sowie ein von dem zweiten Steuerdruck des zweiten Vorsteuermagnetventils (48) in die zweite Stellrichtung steuerbarer dritter Steuerkolben (60) wirkt, wobei der dritte Steuerkolben (60) innerhalb des zweiten Steuerkolbens (58) geführt ist.

9. Bremsanlage einer Zugfahrzeug-Anhängerkombination nach Anspruch 8, **dadurch gekennzeichnet, dass** die elektro-pneumatische Ventileinrichtung (2) weiterhin einen mit dem Schieberventil (6a) zusammen wirkenden Drucksteuerteil (34; 34a; 34b; 34c) mit von der elektronischen Steuereinrichtung gesteuerten Magnetventilen (92, 94; 96, 98; 100; 102) sowie wenigstens einem Drucksensor (22) umfasst.

10. Bremsanlage einer Zugfahrzeug-Anhängerkombination nach Anspruch 9, **dadurch gekennzeichnet, dass** das Drucksteuerteil (34; 34a; 34b; 34c) wenigstens ein gegebenenfalls getaktet steuerbares Magnetventil und/oder ein Proportionalventil beinhaltet.

11. Bremsanlage einer Zugfahrzeug-Anhängerkombination nach Anspruch 9 oder 10, **dadurch gekennzeichnet, dass** das Drucksteuerteil (34; 34a; 34b; 34c) von der elektronischen Steuereinrichtung ansteuerbar ist, um zum Streckbremsen der Zugfahrzeug-Anhängerkombination die Betriebsbremsen des Anhängers wechselweise zuzuspannen und wieder zu lösen.

12. Bremsanlage einer Zugfahrzeug-Anhängerkombination nach Anspruch 10 oder 11, **dadurch gekennzeichnet, dass** das Drucksteuerteil (34; 34a; 34b; 34c) von der elektronischen Steuereinrichtung zum Durchführen einer Testfunktion zum Testen ansteuerbar ist, ob das Zugfahrzeug mit zugespannter Feststellbremse in der Lage ist, einen angekoppelten, aber ungebremsten Anhänger im Stillstand zu halten

## Claims

1. Brake system operated by a pressurised medium in a vehicle or a tractor vehicle/trailer combination, including a parking-brake means (1) provided with a parking brake signal generator that controls an electronic controller for an electro-pneumatic valve means (2) by means of electrical signals, which valve means applies pressurised medium on at least one actuator of a wheel brake or relieves it from pressurised medium, with at least two operating states of the brakes of the vehicle or the tractor vehicle/trailer combination being established as a function of an operation of said parking-brake signal generator, wherein said electro-pneumatic valve means (2) is provided, on the one hand, with a connector (20) for a trailer control valve means and a connector (28) for a parking brake of the tractor vehicle, **characterised in that** said electro-pneumatic valve means (2) comprises at least one further connector (20a) for a trailer control valve means and is so configured and so controllable by said electronic controller that in response to a signal of said parking-brake signal generator, which corresponds to a parked or stationary state, said parking brake of the tractor vehicle is applied and said one connector (20) for said trailer control valve means is ventilated while said further connector (20a) for said trailer control valve means is bled, and that in response to at least one further signal of said parking-brake signal generator, said one connector (20) and said at least one further connector (20a) are ventilated or bled synchronously.

2. Brake system according to Claim 1, **characterised in that** said at least one further signal of said parking-brake signal generator is a signal with which one or several of the following functions is/are associated:
- a test function for testing whether the tractor vehicle with the parking brake applied is in the position to keep a coupled but non-braked trailer in standstill state,
- a driving function for driving, with which the tractor vehicle and the trailer are not braked,
- a driving function for driving with stretched braking function in which the tractor vehicle is not braked and the trailer is braked,
- an auxiliary braking function for braking by means of the parking brake of the tractor vehicle and with the service brake of the trailer in the event of failure of the service brake of the tractor vehicle.

3. Brake system according to any of the preceding Claims, **characterised in that** said electro-pneumatic valve means (2) includes at least one gate valve (6a) that is directly or indirectly controlled by said electronic controller and stable in relation to at least two positions of a valve gate (52), wherein the operating states of the brakes are adjustable as a function of the position of said valve gate (52) and said gate valve (6a) is so configured that said valve gate (52) maintains stably the position it has adopted last in the event of failure in said electronic controller.

4. Brake system according to Claim 3, **characterised in that** said valve gate (52) of said gate valve (6a) is realised by at least one solenoid-operated pilot valve (46, 48) electrically controlled by said electronic controller and by way of activation of the pressurised medium.

5. Brake system according to Claim 4, **characterised in that** said valve gate (52) comprises several control pistons (56, 58, 60) to which control pressures of said solenoid-operated pilot valves (46, 48) are applied.

6. Brake system in a tractor vehicle/trailer combination according to any of the Claims 3 to 5, **characterised in that** said gate valve (6a) is designed in tri-stable form with respect to three positions of said valve gate (52), with a first stable position of said valve gate (52) being associated with a parked condition of the tractor vehicle/trailer combination, in which a parking brake of the tractor vehicle is applied and a service brake of the trailer is applied or released, with a second stable position of said valve gate being associated with a driving state of the tractor vehicle/trailer combination, in which the brakes of the tractor vehicle and of the trailer are released, and with a third stable position of said valve gate (52) being associated with an auxiliary braking condition of the tractor vehicle/trailer combination, in which the parking brake of the tractor vehicle and the service brake of the trailer are applied in the event of failure of the service brake of the tractor vehicle.

7. Brake system according to Claim 6, **characterised in that** said gate valve (6a) is designed as 7/3 way valve.

8. Brake system according to Claim 6 or 7 **characterised in that** a first control piston (56) acts upon said valve gate (52), which is controllable into a first setting direction by a first control pressure generated by a first solenoid-operated pilot valve (46), that a second control piston (58) acts upon said valve gate (52), which is controllable into a second setting direction opposite to said first setting direction by a second control pressure generated by a second solenoid-operated pilot valve (48), and a third control piston (60) acts upon said valve gate (52), which is controllable into said second setting direction by said second control pressure of said second solenoid-operated pilot valve (48), which third control piston (60) is guided inside said second control piston (58).

9. Brake system in a tractor vehicle/trailer combination according to Claim 8, **characterised in that** said electro-pneumatic valve means (2) comprises furthermore a pressure control element (34; 34a; 34b; 34c) interacting with said gate valve (6a) and including solenoid-operated valves (92, 94; 96, 98; 100; 102) controlled by said electronic controller as well as at least one pressure sensor (22).

10. Brake system in a tractor vehicle/trailer combination according to Claim 9, **characterised in that** said pressure control element (34; 34a; 34b; 34c) includes at least one controllable solenoid-operated valve and/or a proportional valve, under clock control if applicable.

11. Brake system in a tractor vehicle/trailer combination according to Claim 9 or 10, **characterised in that** said pressure control element (34; 34a; 34b; 34c) is controllable by said electronic controller for alternative application and subsequent release of the service brakes of the trailer for the stretched braking function of the tractor vehicle/trailer combination.

12. Brake system in a tractor vehicle/trailer combination according to Claim 10 or 11, **characterised in that** said pressure control element (34; 34a; 34b; 34c) is controllable by said electronic controller for performance of a test function for testing whether the tractor vehicle with the parking brake applied is in the position to keep a coupled but non-braked trailer in standstill state.

## Revendications

1. Système de freinage actionné par un milieu sous pression dans un véhicule ou une combinaison véhicule tracteur/remorque, renfermant un moyen à frein de stationnement (1) équipé d'un poste transmetteur de signaux de frein de stationnement, qui commande un dispositif de commande électronique for an moyen à soupape électropneumatique (2) moyennant des signaux électrique, ce moyen à soupape appliquant du milieu sous pression sur au moins un acteur d'un frein de roue ou en déchargeant du milieu sous pression, à au moins deux état de fonctionnement des freins du véhicule ou de la combinaison véhicule tracteur/remorque étant établis en fonction d'un actionnement dudit poste transmetteur de signaux de frein de stationnement, dans lequel ledit moyen à soupape électropneumatique (2) est muni, d'un côté, d'un raccord (20) pour un moyen à soupape de commande de la remorque et d'un raccord (28) pour un frein de stationnement du véhicule tracteur, **caractérisé en ce que** ledit moyen à soupape électropneumatique (2) comprend au moins un raccord supplémentaire (20a) pour un moyen à soupape de commande de la remorque et est configuré et commandable par ledit dispositif de commande électronique d'une telle façon, qu'en réponse à un signal dudit poste transmetteur de signaux de frein de stationnement, qui correspond à un état stationné ou stationnaire, ledit frein de stationnement du véhicule tracteur est serré et ledit un raccord (20) pour ledit moyen à soupape de commande de la remorque est ventilé pendant que ledit raccord supplémentaire (20a) pour ledit moyen à soupape de commande de la remorque est désaéré, et qu'en réponse à au moins un signal supplémentaire dudit poste transmetteur de signaux de frein de stationnement, ledit un raccord (20) et ledit au moins un raccord supplémentaire (20a) sont ventilés ou désaérés en synchronisme.

2. Système de freinage selon la revendication 1, **caractérisé en ce que** ledit au moins un signal supplémentaire dudit poste transmetteur de signaux de frein de stationnement est un signal, auquel une ou plusieurs des fonctions suivantes est/sont affectées :
- une fonction d'essai à essayer, si le véhicule tracteur à frein de stationnement serré est en position de tenir une remorque y accouplée mais non freinée en état d'arrêt,
- une fonction de conduite, à laquelle le véhicule tracteur et la remorque ne sont pas freinés,
- une fonction de conduite à conduire à une fonction de freinage étendu, à laquelle le véhicule tracteur n'est pas freiné et la remorque est freinée,
- une fonction de freinage auxiliaire à serrer le frein moyennant le frein de stationnement du véhicule tracteur et au frein de service de la remorque in au cas de défaillance du frein de service du véhicule tracteur.

3. Système de freinage selon une quelconque des revendications précédentes, **caractérisé en ce que** ledit moyen à soupape électropneumatique (2) renferme au moins une soupape à coulisse (6a), qui est commandé par ledit dispositif de commande électronique de façon directe ou indirecte et qui est stable relativement à au moins deux positions d'une coulisse de soupape (52), dans lequel les états de fonctionnement des freins sont ajustables en fonction de la position de ladite coulisse de soupape (52) et dans lequel ladite soupape à coulisse (6a) est configurée d'une telle manière, que ladite coulisse de soupape (52) tienne la dernière position de façon stable, qu'elle a prise au cas de défaillance dans ledit dispositif de commande électronique.

4. Système de freinage selon la revendication 3, **caractérisé en ce que** ladite coulisse de soupape (52) de ladite soupape à coulisse (6a) se réalise moyennant au moins un vanne pilote à solénoïde (46, 48) sous la commande électrique par ledit dispositif de commande électronique et par activation du milieu sous pression.

5. Système de freinage selon la revendication 4, **caractérisé en ce que** ladite coulisse de soupape (52) comprend plusieurs pistons pilote (56, 58, 60), auxquels des pressions de commande desdites vannes pilote à solénoïdes (46, 48) sont appliquées.

6. Système de freinage dans une combinaison véhicule tracteur/remorque selon une quelconque des revendications 3 à 5, **caractérisé en ce que** ladite soupape à coulisse (6a) est conçu sous forme tri-stable relativement à trois in positions de ladite coulisse de soupape (52), à une première position stable de ladite coulisse de soupape (52) étant affectée à un état stationné de la combinaison véhicule tracteur/remorque, dans lequel un frein de stationnement du véhicule tracteur est serré et un frein de service de la remorque est serré ou desserré, à une deuxième position stable de ladite coulisse de soupape étant affectée à un état de conduite de la combinaison véhicule tracteur/remorque, dans lequel les freins du véhicule tracteur et de la remorque sont desserrés, et à une troisième position stable de ladite coulisse de soupape (52) étant affectée à un état de freinage auxiliaire de la combinaison véhicule tracteur/remorque, dans lequel le frein de stationnement du véhicule tracteur et du frein de service de la remorque sont serrés au cas de défaillance du frein de service du véhicule tracteur.

7. Système de freinage selon la revendication 6, **caractérisé en ce que** ladite soupape à coulisse (6a) est conçue en tant que vanne à 7/3 voies.

8. Système de freinage selon la revendication 6 ou 7 **caractérisé en ce qu'**un premier piston pilote (56) agit sur ladite coulisse de soupape (52), qui est commandable en une première direction de réglage par une première pression de commande, qui est engendrée par une première vanne pilote à solénoïde (46), qu'un deuxième piston pilote (58) agit sur ladite coulisse de soupape (52), qui est commandable en une deuxième direction de réglage, opposée à ladite première direction de réglage, par une deuxième pression de commande, qui est engendrée par une deuxième vanne pilote à solénoïde (48), et qu'un troisième piston pilote (60) agit sur ladite coulisse de soupape (52), qui est commandable en ladite deuxième direction de réglage par ladite deuxième pression de commande de ladite deuxième vanne pilote à solénoïde (48), audit troisième piston pilote (60) étant guidé à l'intérieur dudit deuxième piston pilote (58).

9. Système de freinage dans une combinaison véhicule tracteur/remorque selon la revendication 8, **caractérisé en ce que** ledit moyen à soupape électropneumatique (2) comprend au plus un élément de commande de pression (34; 34a; 34b; 34c) en interaction avec ladite soupape à coulisse (6a) et renfermant lesdites soupapes à solénoïde (92, 94; 96, 98; 100; 102) commandées par ledit dispositif de commande électronique ainsi qu'au moins un capteur de pression (22).

10. Système de freinage dans une combinaison véhicule tracteur/remorque selon la revendication 9, **caractérisé en ce que** ledit élément de commande de pression (34; 34a; 34b; 34c) contient au moins une vanne à solénoïde commandable et/ou une vanne proportionnelle, sous commande de temporisation au cas de besoin.

11. Système de freinage dans une combinaison véhicule tracteur/remorque selon la revendication 9 ou 10, **caractérisé en ce que** ledit élément de commande de pression (34; 34a; 34b; 34c) est commandable par ledit dispositif de commande électronique pour le serrage et desserrage suivant des freins de service en alternation de la remorque pour la fonction de freinage étendu de la combinaison véhicule tracteur/remorque.

12. Système de freinage dans une combinaison véhicule tracteur/remorque selon la revendication 10 ou 11, **caractérisé en ce que** ledit élément de commande de pression (34; 34a; 34b; 34c) est commandable par ledit dispositif de commande électronique pour la réalisation d'une fonction d'essai à essayer, si le véhicule tracteur à frein de stationnement serré est en position de tenir une remorque y accouplée mais non freinée en état d'arrêt.
